# EUROPEAN PATENT APPLICATION

(11) **EP 4 686 274 A1**
(43) Date of publication of application: **28.01.2026**
(21) Application number: 23928055.5
(22) Date of filing: 22.03.2023
(51) Int. Cl.: H04W 56/00

(54) **TIMER PROCESSING METHOD AND APPARATUS, STORAGE MEDIUM, AND TERMINAL**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/083214
(87) International publication number: WO 2024/192742

(57) **Abstract**

The present disclosure relates to a timer processing method and apparatus, a storage medium, and a terminal, the method comprising: determining that a timer is running when a terminal starts to execute a GNSS measurement, and executing a first operation on the timer, the first operation comprising a stop operation or a pause operation, and the timer comprising a timer T317 or a timer T318.

## Description

### TECHNICAL FIELD

The present disclosure relates to the field of communication technology, in particular, to a timer processing method and apparatus, a storage medium, and a terminal.

### BACKGROUND

SIB31 or SIB31-NB carries ephemeris information and Public Timing Advance information for the terminal, the information is very important for keeping the synchronization between the terminal and the network, and thus the terminal needs to maintain the validity of SIB31 or SIB31-NB.

Usually, after obtaining SIB31 or SIB31-NB, a timer will be started. After the timer expires, it is determined that SIB31 or SIB31-NB is invalid and an attempt is made to obtain SIB31 or SIB31-NB, and another timer will be started at the time being. If the terminal is currently performing the GNSS (Global Navigation Satellite System) measurement and if the time required for the GNSS measurement is long, due to the fact that the terminal cannot obtain SIB31 or SIB31-NB during the GNSS measurement, it will directly cause the timer, which is started after SIB31 or SIB31-NB is invalid, to trigger the RLF (Radio Link Failure) due to the expiration of the timer, which will result in link re-establishment, thereby terminating the GNSS measurement.

### SUMMARY

The present disclosure provides a timer processing method, a timer processing apparatus, a storage medium, and a terminal, to overcome the problems in the related art.

According to a first aspect of embodiments of the present disclosure, there is provided a timer processing method including:
determining that a timer is running when a terminal begins to perform a GNSS measurement; and performing a first operation on the timer, wherein the first operation includes a stop operation or a pause operation, and the timer includes a timer T317 or a timer T318.

According to a second aspect of embodiments of the present disclosure, there is provided a timer processing apparatus including:
a first determination module configured to determine that the timer is running when a terminal begins to perform a GNSS measurement, and perform a first operation on the timer, wherein the first operation includes a stop operation or a pause operation, and the timer includes a timer T317 or a timer T318.

According to a third aspect of embodiments of the present disclosure, there is provided a terminal including:
a processor;
a memory configured to store executable instructions for the processor;
wherein the processor is configured to execute steps of the method described in the first aspect.

According to a fourth aspect of embodiments of the present disclosure, there is provided a computer-readable storage medium having computer program instructions stored thereon, which when executed by a processor, cause steps of the method described in the first aspect to be executed.

According to the above schemes, if it is determined that the timer T317 is running when the terminal begins to perform the GNSS measurement, then the stop operation or the pause operation is performed on the timer T317, which can avoid starting of the timer T318 due to the expiration of the timer T317, and thus avoiding terminating of the GNSS measurement due to the expiration of the timer T318. If it is determined that the timer T318 is running when the terminal begins to perform the GNSS measurement, then the stop operation or the pause operation is performed on the timer T318, to avoid the terminating of the GNSS measurement due to the expiration of the timer T318.

### BRIEF DESCRIPTION OF THE DRAWINGS

The drawings, which are incorporated in and constitute a part of this specification, illustrate embodiments consistent with the present disclosure and serve together with the specification to explain principles of the present disclosure.
FIG. 1 is a flowchart of a timer processing method according to one or more embodiments of the present disclosure.
FIG. 2 is a flowchart of a timer processing method according to one or more embodiments of the present disclosure.
FIG. 3 is a flowchart of a timer processing method according to one or more embodiments of the present disclosure.
FIG. 4 is a flowchart of a timer processing method according to one or more embodiments of the present disclosure.
FIG. 5 is a flowchart of a timer processing method according to one or more embodiments of the present disclosure.
FIG. 6 is a flowchart of a timer processing method according to one or more embodiments of the present disclosure.
FIG. 7 is a flowchart of a timer processing method according to one or more embodiments of the present disclosure.
FIG. 8 is a flowchart of a timer processing method according to one or more embodiments of the present disclosure.
FIG. 9 is a flowchart of a timer processing method according to one or more embodiments of the present disclosure.
FIG. 10 is a flowchart of a timer processing method according to one or more embodiments of the present disclosure.
FIG. 11 is a flowchart of a timer processing method according to one or more embodiments of the present disclosure.
FIG. 12 is a flowchart of a timer processing method according to one or more embodiments of the present disclosure.
FIG. 13 is a block diagram of a timer processing apparatus according to one or more embodiments of the present disclosure.
FIG. 14 is a block diagram of a terminal according to one or more embodiments of the present disclosure.

### DETAILED DESCRIPTION

Exemplary embodiments will be described in detail here, with examples shown in the drawings. When referring to the drawings, unless otherwise indicated, the same reference numerals in different drawings represent the same or similar elements. The embodiments described in the following exemplary embodiments do not represent all embodiments consistent with the present disclosure. On the contrary, they are only examples of devices and methods consistent with some aspects of the present disclosure as described in the appended claims.

It should be noted that all actions to obtain signals, information, or data in the present disclosure are carried out in accordance with the corresponding data protection regulations and policies of the country where they are located, and with authorization granted by the corresponding device owner.

In the present disclosure, terms such as "first", "second", etc. are used to distinguish similar objects and do not necessarily need to be understood as a specific order or sequence. In addition, unless otherwise indicated, in the description of the drawings, the same reference numerals in different drawings represent the same elements.

In the present disclosure, unless otherwise indicated, "multiple" refers to two or more, and other quantifiers are similar to this. The expressions such as "at least one of', "one or more", or similar expressions refer to any combination of these items, including any combination of single or plural items. For example, at least one can represent any quantity. For example, one or more of a, b, or c, can represent: a, b, c, a-b, a-c, b-c, or a-b-c, where a, b, and c can be single or multiple. The expression "and/or" describes an association relationship between related objects, indicating that there can be three types of relationships. For example, A and/or B can represent the existence of A alone, the existence of A and B at the same time, and the existence of B alone, where A and B can be singular or plural.

Although operations or steps are described in a specific order in the drawings in embodiments of the present disclosure, it should not be understood as requiring the execution of these operations or steps in the specific order or serial order shown, or requiring the execution of all shown operations or steps to achieve the desired results. In embodiments of the present disclosure, these operations or steps can be performed sequentially or in parallel, or only some of these operations or steps are performed.

For the terminal, the validity of the GNSS position fix obtained by the terminal can only be maintained for a period of time. After this period of time, the GNSS of the terminal becomes invalid and the terminal needs to re-obtain the GNSS position. At present, in 3GPP, it has agreed that the terminal can perform the GNSS measurement based on a measurement gap, and also, it has agreed that the terminal can perform the GNSS measurement through autonomously triggering, alternatively, it has agreed that the terminal can perform the GNSS measurement through triggering by the base station.

For the terminal, SIB31 or SIB31-NB carries ephemeris information and Public Timing Advance information, which is very important for keeping the synchronization between the terminal and the network. Therefore, the terminal in a connected state needs to maintain the validity of SIB31/SIB31-NB. A timer T317 is a timer used by the terminal to determine whether SIB31 or SIB31-NB is valid. After obtaining SIB31 or SIB31-NB, the terminal will start the timer T317. If the timer T317 expires, the terminal will consider the obtained SIB31 or SIB31-NB to be invalid, and will attempt to obtain SIB31 or SIB31-NB again and start a timer T318. After starting the timer T318, if SIB31 or SIB31-NB is obtained, the terminal will then stop the timer T318, that is, ending the timer T318. If SIB31 or SIB31-NB has not yet been obtained until the timer T318 expires, the terminal considers that there is a link failure, triggers the RLF to initiate the radio link re-establishment, and then enters the LTE transmission and reception process.

However, some of the IoT (Internet of Things) terminals cannot support simultaneous the GNSS reception and the LTE transmission and reception. In the case where the GNSS measurement requires a long time, if the timer T317 expires during this period, the terminal will start the timer T318 and begin to receive SIB31 or SIB31-NB. However, during the GNSS measurement, the terminal cannot obtain SIB31 or SIB31-NB, which will result in the expiration of the timer T318 and the triggering of the RLF, thereby performing the radio link re-establishment, and terminating the GNSS measurement.

Therefore, embodiments of the present disclosure provide a timer processing method, a timer processing apparatus, a storage medium, and a terminal. Description and explanations of the present disclosure will be provided in the following with reference to the drawings.

First, it should be noted that functions of the timer T317 and the timer T318 involved in following embodiments of the present disclosure can be correspondingly referred to the description and explanations of relevant timers mentioned above, and will not be repeated in the following embodiments.

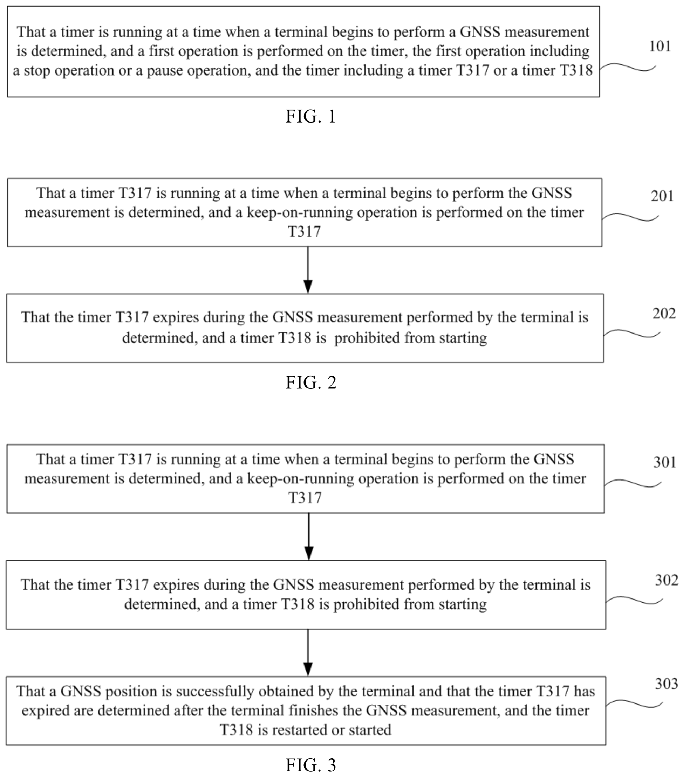

FIG. 1 is a flowchart of a timer processing method according to one or more embodiments of the present disclosure. The method can be performed by a terminal and can include following steps, as shown in FIG. 1.

In step 101, that a timer is running at a time when a terminal begins to perform a GNSS measurement is determined, and a first operation is performed on the timer, the first operation including a stop operation or a pause operation, and the timer including a timer T317 or a timer T318.

It should be noted that the stop operation is used to directly end the timing by the timer. That is, the timer's timing is ended, and the timer needs to be restarted to restart the next timing. The pause operation is used to pause the timing by the timer, and the timer will continue the timing from the last pausing position after resuming running.

According to the above schemes, if it is determined that the timer T317 is running at the time when the terminal begins to perform the GNSS measurement, then the stop operation or the pause operation is performed on the timer T317, which can avoid starting of the timer T318 due to the expiration of the timer T317, and thus avoiding terminating of the GNSS measurement due to the expiration of the timer T318. If it is determined that the timer T318 is running at the time when the terminal begins to perform the GNSS measurement, then the stop operation or the pause operation is performed on the timer T318, to avoid the terminating of the GNSS measurement due to the expiration of the timer T318.

In some embodiments, the timer includes the timer T317, and the first operation includes the pause operation. The step 101 can be implemented by determining that the timer T317 is running at the time when the terminal begins to perform the GNSS measurement, and performing the pause operation on the timer T317.

In this way, it can avoid starting the timer T318 due to the expiration of the timer T317, and thus avoiding the terminating of the GNSS measurement due to the expiration of the timer T318.

In some embodiments, the timer includes the timer T317, and the first operation includes the stop operation. The step 101 can be implemented by determining that the timer T317 is running at the time when the terminal begins to perform the GNSS measurement, and performing the stop operation on the timer T317.

In this way, it can avoid starting the timer T318 due to the expiration of the timer T317, and thus avoiding the terminating of the GNSS measurement due to the expiration of the timer T318.

In some embodiments, the timer includes the timer T318, and the first operation includes the pause operation. The step 101 can be implemented by determining that the timer T318 is running at the time when the terminal begins to perform the GNSS measurement, and performing the pause operation on the timer T318.

In this way, it can avoid the terminating of the GNSS measurement due to the expiration of the timer T318.

In some embodiments, the timer includes the timer T318, and the first operation includes the stop operation. The step 101 can be implemented by determining that the timer T318 is running at the time when the terminal begins to perform the GNSS measurement, and performing the stop operation on the timer T318.

In this way, it can avoid the terminating of the GNSS measurement due to the expiration of the timer T318.

In some embodiments, determining whether the terminal begins to perform the GNSS measurement can be achieved by determining whether a current time is a beginning time of the GNSS measurement. When the current time is the beginning time of the GNSS measurement, it is determined that the terminal begins to perform the GNSS measurement.

In some embodiments, the beginning time of the GNSS measurement can be a beginning time of a measurement gap configured by the network for the GNSS measurement.

In some embodiments, for the GNSS measurement triggered by the base station, the beginning time of the GNSS measurement can be a time corresponding to an extended time obtained by extending a time when the terminal receives the GNSS measurement command issued by the base station by a first preset duration. The first preset duration can be determined based on agreement by the protocol or configured by the network. In some embodiments, the first preset duration can have a value of 0.

In some embodiments, for the GNSS measurement triggered autonomously by the terminal, the beginning time of the GNSS measurement can be a time corresponding to an extended time obtained by extending a time when a terminal's GNSS validity duration timer expires by a second preset duration. The second preset duration can be determined based on agreement by the protocol or configured by the network. In some embodiments, the second preset duration can have a value of 0.

FIG. 2 is a flowchart of a timer processing method according to one or more embodiments of the present disclosure. The method can be performed by a terminal. In some embodiments, the first operation also includes a keep-on-running operation, and the timer includes the timer T317. As shown in FIG. 2, the method includes following steps.

In step 201, that a timer T317 is running at a time when a terminal begins to perform the GNSS measurement is determined, and a keep-on-running operation is performed on the timer T317.

In step 202, that the timer T317 expires during the GNSS measurement performed by the terminal is determined, and a timer T318 is prohibited from starting.

It should be noted that step 201 is an implementation of step 101. In addition, the keep-on-running operation means not interfering with the timer's running and allowing the timer to continue the timing.

It can be understood that when the timer T317 expires during the GNSS measurement performed by the terminal, and if the timer T318 starts normally due to the expiration of the timer T317, the GNSS measurement may be terminated. Therefore, when it is determined that the timer T317 expires during the GNSS measurement performed by the terminal, the timer T318 is prohibited from starting, which can avoid the terminating of the GNSS measurement due to the expiration of the timer T318.

FIG. 3 is a flowchart of a timer processing method according to one or more embodiments of the present disclosure. The method can be performed by a terminal. In some embodiments, the first operation also includes a keep-on-running operation, and as shown in FIG. 3, the method includes following steps.

In step 301, that a timer T317 is running at a time when a terminal begins to perform the GNSS measurement is determined, and a keep-on-running operation is performed on the timer T317.

In step 302, that the timer T317 expires during the GNSS measurement performed by the terminal is determined, and a timer T318 is prohibited from starting.

In step 303, that a GNSS position is successfully obtained by the terminal and that the timer T317 has expired are determined after the terminal finishes the GNSS measurement, and the timer T318 is restarted or started.

In some embodiments, step 301 is an implementation of step 101. In addition, the explanation of the first operation can refer to other related embodiments, which will not be repeated here.

It should be noted that after the terminal finishes the GNSS measurement, if the timer T317 has expired, the timer T318 may have been started normally due to the expiration of the timer T317 and is still running. In this case, if it is determined that the terminal has successfully obtained the GNSS position, the timer T318 can be restarted to provide the terminal with time to determine whether a link failure has occurred.

Alternatively, after the terminal finishes the GNSS measurement, if the timer T317 has expired, the timer T318 may not yet have been successfully started. In this case, if it is determined that the terminal has successfully obtained the GNSS position, the timer T318 can be started to provide the terminal with time to determine whether a link failure has occurred.

In some embodiments, finishing the GNSS measurement can include ending of a GNSS measurement duration, or the terminal finishing the GNSS measurement before the ending of the GNSS measurement duration, or the GNSS measurement being interrupted for other reasons. In some embodiments, the GNSS measurement duration can be configured by the network or determined based on agreement by the protocol.

In some embodiments, starting the timer T318 in step 303 can be achieved by determining that the timer T318 is not running, and starting the timer T318.

In this way, when the timer T318 is not running, starting the timer T318 to provide the terminal with time to determine whether a link failure has occurred.

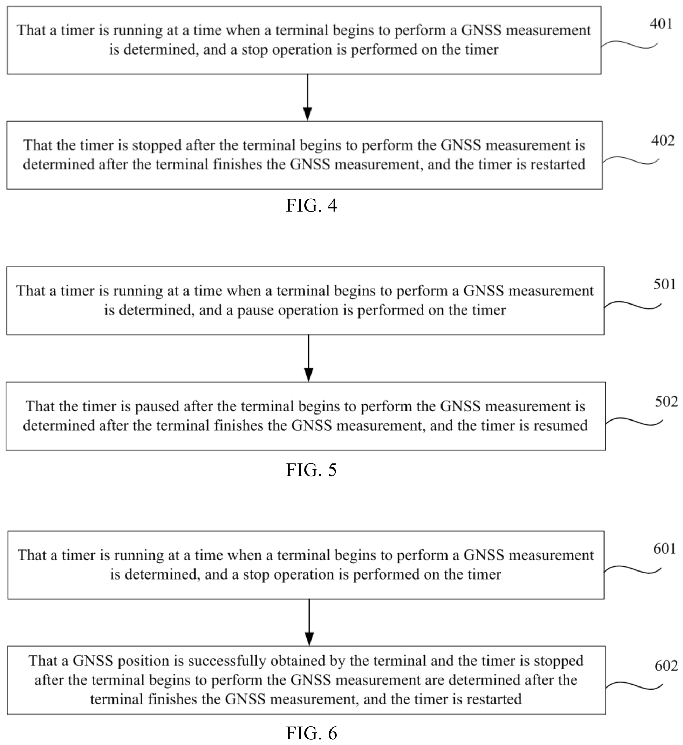

FIG. 4 is a flowchart of a timer processing method according to one or more embodiments of the present disclosure. The method can be performed by a terminal. As shown in FIG. 4, the method includes following steps.

In step 401, that a timer is running at a time when a terminal begins to perform a GNSS measurement is determined, and a stop operation is performed on the timer.

In step 402, that the timer is stopped after the terminal begins to perform the GNSS measurement is determined after the terminal finishes the GNSS measurement, and the timer is restarted.

In some embodiments, the timer can include the timer T317 or the timer T318. In addition, the explanation of the stop operation can refer to other related embodiments, which will not be repeated here.

According to the above method, when it is determined that the timer is running at the time when the terminal begins to perform the GNSS measurement, the stop operation is performed on the timer to avoid the terminating of the GNSS measurement due to the expiration of the timer. In addition, after the terminal finishes the GNSS measurement, if it is determined that the timer is stopped after the terminal begins to perform the GNSS measurement, that is, the timer is stopped due to the GNSS measurement, then the timer will be restarted, so that the timer can work normally, allowing the terminal to perform relevant operations corresponding to the timer based on the timer.

FIG. 5 is a flowchart of a timer processing method according to one or more embodiments of the present disclosure. The method can be performed by a terminal. As shown in FIG. 5, the method includes following steps.

In step 501, that a timer is running at a time when a terminal begins to perform a GNSS measurement is determined, and a pause operation is performed on the timer.

In step 502, that the timer is paused after the terminal begins to perform the GNSS measurement is determined after the terminal finishes the GNSS measurement, and the timer is resumed.

In some embodiments, the timer can include the timer T317 or the timer T318. In addition, the explanation of the pause operation can refer to other related embodiments, which will not be repeated here.

According to the above method, when it is determined that the timer is running at the time when the terminal begins to perform the GNSS measurement, the pause operation is performed on the timer to avoid the terminating of the GNSS measurement due to the expiration of the timer. In addition, after the terminal finishes the GNSS measurement, if it is determined that the timer is paused after the terminal begins to perform the GNSS measurement, that is, the timer is paused due to the GNSS measurement, then the timer will be resumed, so that the timer can work normally, allowing the terminal to perform relevant operations corresponding to the timer based on the timer.

FIG. 6 is a flowchart of a timer processing method according to one or more embodiments of the present disclosure. The method can be performed by a terminal. As shown in FIG. 6, the method includes following steps.

In step 601, that a timer is running at a time when a terminal begins to perform a GNSS measurement is determined, and a stop operation is performed on the timer.

In step 602, that a GNSS position is successfully obtained by the terminal and that the timer is stopped after the terminal begins to perform the GNSS measurement are determined after the terminal finishes the GNSS measurement, and the timer is restarted.

In some embodiments, the timer can include the timer T317 or the timer T318. In addition, the explanation of the stop operation can refer to other related embodiments, which will not be repeated here.

According to the above method, when it is determined that the timer is running at the time when the terminal begins to perform the GNSS measurement, the stop operation is performed on the timer to avoid the terminating of the GNSS measurement due to the expiration of the timer. In addition, after the terminal finishes the GNSS measurement, it is determined that the terminal has successfully obtained the GNSS position and the timer is stopped after the terminal begins to perform the GNSS measurement, that is, the timer is stopped due to the GNSS measurement, then the timer will be restarted, so that the timer can work normally, allowing the terminal to perform relevant operations corresponding to the timer based on the timer. It can be understood that if the terminal fails to successfully obtain the GNSS position, the timer will not be restarted, so that the terminal can perform the next GNSS measurement and avoid the terminating of the GNSS measurement due to the expiration of the timer.

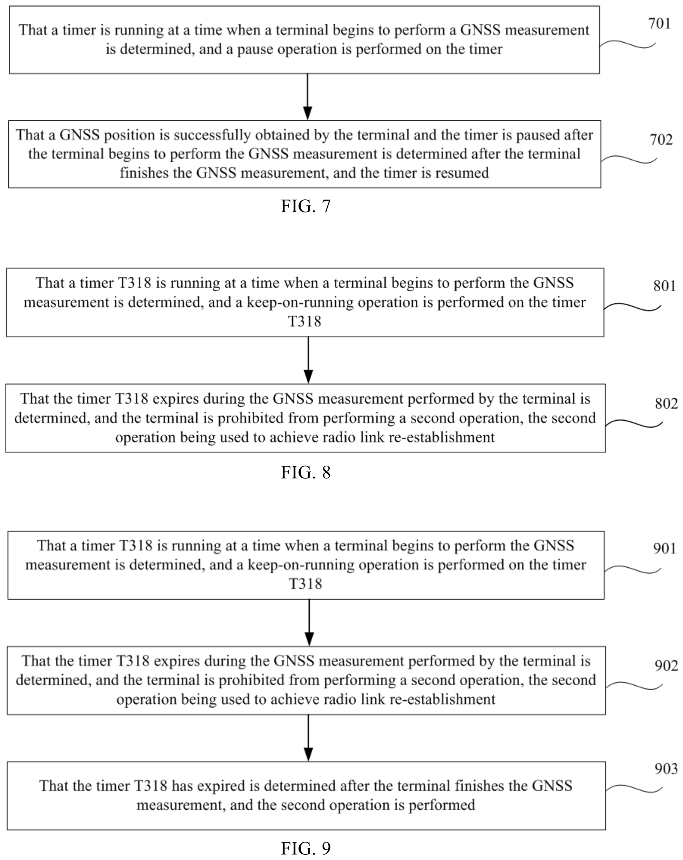

FIG. 7 is a flowchart of a timer processing method according to one or more embodiments of the present disclosure. The method can be performed by a terminal. As shown in FIG. 7, the method includes following steps.

In step 701, that a timer is running at a time when a terminal begins to perform a GNSS measurement is determined, and a pause operation is performed on the timer.

In step 702, that a GNSS position is successfully obtained by the terminal and that the timer is paused after the terminal begins to perform the GNSS measurement is determined after the terminal finishes the GNSS measurement, and the timer is resumed.

In some embodiments, the timer can include the timer T317 or the timer T318. In addition, the explanation of the pause operation can refer to other related embodiments, which will not be repeated here.

According to the above method, when it is determined that the timer is running at the time when the terminal begins to perform the GNSS measurement, the pause operation is performed on the timer to avoid the terminating of the GNSS measurement due to the expiration of the timer. In addition, after the terminal finishes the GNSS measurement, it is determined that the terminal has successfully obtained the GNSS position and the timer is paused after the terminal begins to perform the GNSS measurement, that is, the timer is paused due to the GNSS measurement, the timer will be resumed, so that the timer can work normally, allowing the terminal to perform relevant operations corresponding to the timer based on the timer. If the terminal fails to successfully obtain the GNSS position, the timer will not be resumed, so that the terminal can perform the next GNSS measurement and avoid the terminating of the GNSS measurement due to the expiration of the timer.

FIG. 8 is a flowchart of a timer processing method according to one or more embodiments of the present disclosure. The method can be performed by a terminal. In some embodiments, the timer includes the timer T318, and the first operation also includes a keep-on-running operation. As shown in FIG. 8, the method includes following steps.

In step 801, that a timer T318 is running at a time when a terminal begins to perform the GNSS measurement is determined, and a keep-on-running operation is performed on the timer T318.

In step 802, that the timer T318 expires during the GNSS measurement performed by the terminal is determined, and the terminal is prohibited from performing a second operation, the second operation being used to achieve radio link re-establishment.

It should be noted that step 801 is an implementation of step 101. In addition, the explanation of the keep-on-running operation can refer to other related embodiments, which will not be repeated here.

In some embodiments, the second operation includes initiating a radio link failure or initiating radio link re-establishment.

In some embodiments, when the second operation includes initiating a radio link failure, the step 802 can be implemented by determining that the timer T318 expires during the GNSS measurement performed by the terminal, and prohibiting the terminal from initiating a radio link failure.

In some embodiments, when the second operation includes initiating radio link re-establishment, the step 802 can be implemented by determining that the timer T318 expires during the GNSS measurement performed by the terminal, and prohibiting the terminal from initiating radio link re-establishment. It should be noted that this embodiment can allow the terminal to initiate the radio link failure.

According to the above method, it is determined that the timer T318 expires during the GNSS measurement performed by the terminal, and the terminal is prohibited from performing the second operation, so that the terminal will not perform the LET transmission and reception, to facilitate the terminal to continue performing the GNSS measurement.

FIG. 9 is a flowchart of a timer processing method according to one or more embodiments of the present disclosure. The method can be performed by a terminal. In some embodiments, the timer includes the timer T318, and the first operation also includes a keep-on-running operation. As shown in FIG. 9, the method includes following steps.

In step 901, that a timer T318 is running at a time when a terminal begins to perform the GNSS measurement is determined, and a keep-on-running operation is performed on the timer T318.

In step 902, that the timer T318 expires during the GNSS measurement performed by the terminal is determined, and the terminal is prohibited from performing a second operation, the second operation being used to achieve radio link re-establishment.

In step 903, that the timer T318 has expired is determined after the terminal finishes the GNSS measurement, and the second operation is performed.

It should be noted that step 901 is an implementation of step 101.

In some embodiments, the second operation and the keep-on-running operation can refer to relevant embodiments, which will not be repeated here.

According to the above method, if the terminal determines that the timer T318 has expired after finishing the GNSS measurement, the terminal will perform the second operation to finish the radio link re-establishment of the terminal.

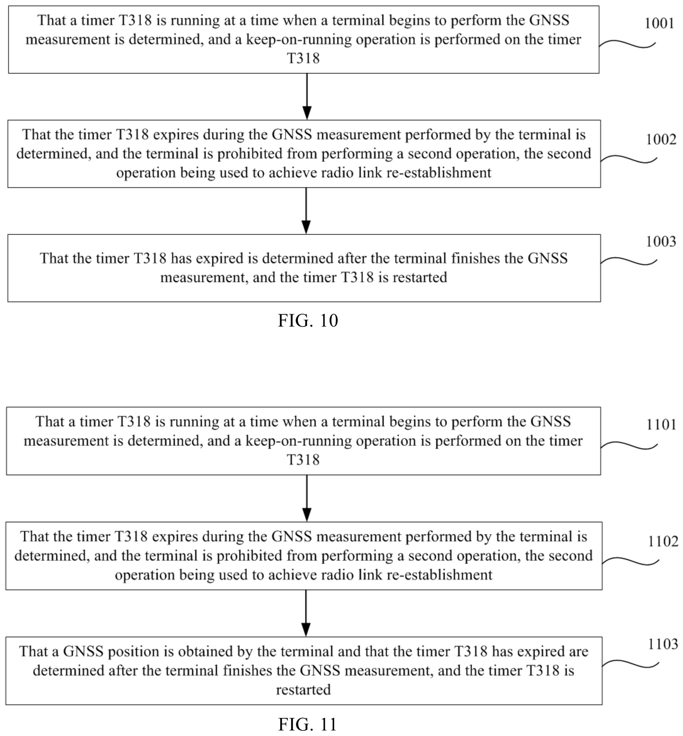

FIG. 10 is a flowchart of a timer processing method according to one or more embodiments of the present disclosure. The method can be performed by a terminal. In some embodiments, the timer includes the timer T318, and the first operation also includes a keep-on-running operation. As shown in FIG. 10, the method includes following steps.

In step 1001, that a timer T318 is running at a time when a terminal begins to perform the GNSS measurement is determined, and a keep-on-running operation is performed on the timer T318.

In step 1002, that the timer T318 expires during the GNSS measurement performed by the terminal is determined, and the terminal is prohibited from performing a second operation, the second operation being used to achieve radio link re-establishment.

In step 1003, that the timer T318 has expired is determined after the terminal finishes the GNSS measurement, and the timer T318 is restarted.

It should be noted that step 1001 is an implementation of step 101.

In some embodiments, the second operation and the keep-on-running operation can refer to relevant embodiments, which will not be repeated here.

According to the above method, after finishing the GNSS measurement, if it is determined that the timer T318 has expired, the terminal will restart the timer T318, to provide the terminal with time to determine whether a link failure has occurred.

FIG. 11 is a flowchart of a timer processing method according to one or more embodiments of the present disclosure. The method can be performed by a terminal. In some embodiments, the timer includes the timer T318, and the first operation also includes a keep-on-running operation. As shown in FIG. 11, the method includes following steps.

In step 1101, that a timer T318 is running at a time when a terminal begins to perform the GNSS measurement is determined, and a keep-on-running operation is performed on the timer T318.

In step 1102, that the timer T318 expires during the GNSS measurement performed by the terminal is determined, and the terminal is prohibited from performing a second operation, the second operation being used to achieve radio link re-establishment.

In step 1103, that a GNSS position is obtained by the terminal and that the timer T318 has expired are determined after the terminal finishes the GNSS measurement, and the timer T318 is restarted.

It should be noted that step 1101 is an implementation of step 101.

In some embodiments, the second operation and the keep-on-running operation can refer to relevant embodiments, which will not be repeated here.

According to the above method, after finishing the GNSS measurement, if it is determined that the terminal has obtained the GNSS position and the timer T318 has expired, the terminal will restart the timer T318 to provide the terminal with time to determine whether a link failure has occurred. It can be understood that if the terminal fails to successfully obtain the GNSS position, the timer T318 will not be restarted, so that the terminal can perform the next GNSS measurement and avoid the terminating of the GNSS measurement due to the expiration of the timer T318.

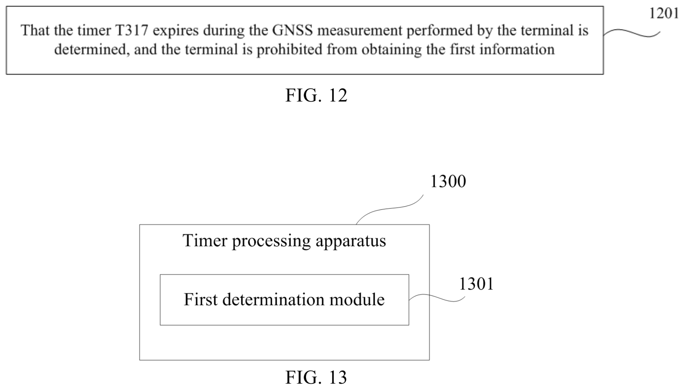

FIG. 12 is a flowchart of a timer processing method according to one or more embodiments of the present disclosure. The method can be performed by a terminal. In some embodiments, the timer includes the timer T318, and the first operation also includes a keep-on-running operation. As shown in FIG. 12, the method includes following steps.

In step 1201, that the timer T317 expires during the GNSS measurement performed by the terminal is determined, and the terminal is prohibited from obtaining the first information.

It should be noted that the first information is used for keeping the synchronization between the terminal and the network. If the terminal does not need to obtain the first information, the terminal also does not need to start the timer T318. In this way, the terminal will not enter the LET transmission and reception due to the expiration of the timer T318, and thus avoiding the terminating of the GNSS measurement.

In some embodiments, the first information includes SIB31 and/or SIB31-NB, and the explanation of the first information can refer to other relevant embodiments.

In some embodiments, the above step 1201 can be implemented by determining that the timer T317 expires during the GNSS measurement performed by the terminal, and prohibiting the terminal from obtaining SIB31.

In this way, there is no need to start the timer T318, then the terminal will not enter the LET transmission and reception due to the expiration of the timer T318, and thus avoiding the terminating of the GNSS measurement.

In some embodiments, the above step 1201 can be implemented by determining that the timer T317 expires during the GNSS measurement performed by the terminal, and prohibiting the terminal from obtaining SIB31-NB.

In this way, there is no need to start the timer T318, then the terminal will not enter the LET transmission and reception due to the expiration of the timer T318, and thus avoiding the terminating of the GNSS measurement.

In some embodiments, the above step 1201 can be implemented by determining that the timer T317 expires during the GNSS measurement performed by the terminal, and prohibiting the terminal from obtaining SIB31 and SIB31-NB.

In this way, there is no need to start the timer T318, then the terminal will not enter the LET transmission and reception due to the expiration of the timer T318, and thus avoiding the terminating of the GNSS measurement.

Embodiments of the present disclosure provide a timer processing method, and the method includes following steps.

In some embodiments, when the UE (User Equipment) begins to perform the GNSS measurement, if the timer is running, the timer will then be stopped, paused, or kept on running. Stopping, pausing, or keeping on running the timer here can be understood as performing a stop operation, a pause operation, or a keep-on-running operation on the timer. The timer includes the timer T317 or the timer T318. The features in the present embodiment can refer to the explanations of the relevant embodiments mentioned above, and will not be repeated here.

In some embodiments, a beginning time of the GNSS measurement is a beginning time of a measurement gap configured by the network for the GNSS measurement.

In some embodiments, for the GNSS measurement triggered by an eNB (Evolved Node B), the beginning time of the GNSS measurement is a time when the UE receives the GNSS measurement command issued by the base station plus an offset. In some embodiments, this offset can have a value of 0, or this offset can be determined based on agreement by the protocol or configured by the network. The "plus" here means "extending by", and the "offset" here is, for example, the first preset duration mentioned above.

In some embodiments, for the GNSS measurement triggered by the UE, the beginning time of the GNSS measurement is an expiration time of the UE's GNSS validity duration timer plus an offset. In some embodiments, this offset can have a value of 0, or this offset can be determined based on agreement by the protocol or configured by the network. The "plus" here means "extending by", and the "offset" here is, for example, the second preset duration mentioned above.

In some embodiments, if the timer T317 expires during the GNSS measurement, the UE does not start the timer T318. The features in the present embodiment can refer to the explanations of the relevant embodiments mentioned above, and will not be repeated here.

In some embodiments, after finishing the GNSS measurement, if the UE successfully obtains the GNSS position and the timer T317 has expired, then the UE starts or restarts the timer T318. The features in the present embodiment can refer to the explanations of the relevant embodiments mentioned above, and will not be repeated here.

In some embodiments, finishing the GNSS measurement includes ending of a GNSS measurement duration, or the UE finishing the GNSS measurement before the ending of the GNSS measurement duration, or the GNSS measurement being interrupted for other reasons. The GNSS measurement duration can be configured by the network or determined based on agreement by the protocol.

In some embodiments, after finishing the GNSS measurement, if the UE successfully obtains the GNSS position and the timer T317 has expired, but the timer T318 is not running, then the UE starts the timer T318. The features in the present embodiment can refer to the explanations of the relevant embodiments mentioned above, and will not be repeated here.

In some embodiments, after the UE finishes the GNSS measurement, if the timer is stopped or paused due to the GNSS measurement, then the UE restarts or resumes the timer. The timer includes the timer T317 or the timer T318. The features in the present embodiment can refer to the explanations of the relevant embodiments mentioned above, and will not be repeated here.

In some embodiments, finishing the GNSS measurement includes ending of a GNSS measurement duration, or the UE finishing the GNSS measurement before the ending of the GNSS measurement duration, or the GNSS measurement being interrupted for other reasons. The GNSS measurement duration can be configured by the network or determined based on agreement by the protocol.

In some embodiments, after finishing the GNSS measurement, if the UE successfully obtains the GNSS position and the timer is stopped or paused due to the GNSS measurement, then the UE restarts or resumes the timer. The timer includes the timer T317 or the timer T318. The features in the present embodiment can refer to the explanations of the relevant embodiments mentioned above, and will not be repeated here.

In some embodiments, during the GNSS measurement performed by the UE, if the timer T318 expires, the UE does not trigger the RLF, or the UE triggers the RLF but does not initiate the radio link re-establishment. The features in the present embodiment can refer to the explanations of the relevant embodiments mentioned above, and will not be repeated here.

In some embodiments, after the UE finishes the GNSS measurement, if the timer T318 has expired, then the UE initiates the radio link re-establishment, or the UE triggers the RLF and initiates the radio link re-establishment. The features in the present embodiment can refer to the explanations of the relevant embodiments mentioned above, and will not be repeated here.

In some embodiments, after the UE finishes the GNSS measurement, if the timer T318 has expired, then the UE restarts the timer T318. The features in the present embodiment can refer to the explanations of the relevant embodiments mentioned above, and will not be repeated here.

In some embodiments, after finishing the GNSS measurement, if the UE successfully obtains the GNSS position and the timer T318 has expired, the UE restarts timer T318. The features in the present embodiment can refer to the explanations of the relevant embodiments mentioned above, and will not be repeated here.

In some embodiments, during the GNSS measurement performed by the UE, if the timer T317 expires, the UE does not obtain SIB31/SIB31-NB.

In the above embodiments, the UE refers to the terminal in the embodiments mentioned above.

In addition, it should be noted that in the above embodiments, multiple embodiments or features separated by "or" will not affect other solutions even if some of the features are not achievable. In addition, under no contradictory circumstances, embodiments or implementations involved in different timer processing methods and their various optional solutions can be combined with each other, and will not be repeated here.

FIG. 13 is a block diagram of a timer processing apparatus according to one or more embodiments of the present disclosure. As shown in FIG. 13, the timer processing apparatus 1300 includes a first determination module 1301.

The first determination module 1301 is configured to determine that the timer is running when a terminal begins to perform a GNSS measurement, and perform a first operation on the timer, the first operation including a stop operation or a pause operation, and the timer including a timer T317 or a timer T318.

In some embodiments, the first operation further includes a keep-on-running operation, the timer includes the timer T317, and the timer processing apparatus 1300 further includes a second determination module.

The second determination module is configured to determine that the timer T317 expires during the GNSS measurement performed by the terminal, and prohibit the timer T318 from starting.

In some embodiments, the timer processing apparatus 1300 further includes a third determination module.

The third determination module is configured to determine, after the terminal finishes the GNSS measurement, that the terminal successfully obtains a GNSS position and that the timer T317 already expires, and restart or start the timer T318.

In some embodiments, the third determination module is specifically configured to determine, after the terminal finishes the GNSS measurement, that the terminal successfully obtains the GNSS position, that the timer T317 already expires, and that the timer T318 is not running, and restart the timer T318.

In some embodiments, the timer includes the timer T317 or the timer T318, and the timer processing apparatus 1300 further includes a fourth determination module.

The fourth determination module is configured to determine, after the terminal finishes the GNSS measurement, that the timer is stopped after the terminal begins to perform the GNSS measurement, and restart the timer.

In some embodiments, the timer includes the timer T317 or the timer T318, and the timer processing apparatus 1300 further includes a fifth determination module.

The fifth determination module is configured to determine, after the terminal finishes the GNSS measurement, that the timer is paused after the terminal begins to perform the GNSS measurement, and resume the timer.

In some embodiments, the timer includes the timer T317 or the timer T318, and the timer processing apparatus 1300 further includes a sixth determination module.

The sixth determination module is configured to determine, after the terminal finishes the GNSS measurement, that the terminal successfully obtains a GNSS position and that the timer is stopped after the terminal begins to perform the GNSS measurement, and restart the timer.

In some embodiments, the timer includes the timer T317 or the timer T318, and the timer processing apparatus 1300 further includes a seventh determination module.

The seventh determination module is configured to determine, after the terminal finishes the GNSS measurement, that the terminal successfully obtains a GNSS position and that the timer is paused after the terminal begins to perform the GNSS measurement, and resume the timer.

In some embodiments, the timer includes the timer T318, the first operation further includes a keep-on-running operation, and the timer processing apparatus 1300 further includes an eighth determination module.

The eighth determination module is configured to determine that the timer T318 expires during the GNSS measurement performed by the terminal, and prohibit the terminal from performing a second operation, the second operation being used to achieve radio link re-establishment.

In some embodiments, the timer processing apparatus 1300 further includes a ninth determination module.

The ninth determination module is configured to determine, after the terminal finishes the GNSS measurement, that the timer T318 already expires, and perform the second operation.

In some embodiments, the timer processing apparatus 1300 further includes a tenth determination module.

The tenth determination module is configured to determine, after the terminal finishes the GNSS measurement, that the timer T318 already expires, and restart the timer T318.

In some embodiments, the timer processing apparatus 1300 further includes an eleventh determination module.

The eleventh determination module is configured to determine, after the terminal finishes the GNSS measurement, that a GNSS position is obtained by the terminal and that the timer T318 already expires, and restart the timer T318.

In some embodiments, the timer processing apparatus 1300 further includes a twelfth determination module.

The twelfth determination module is configured to determine that the timer T317 expires during the GNSS measurement performed by the terminal, and prohibit the terminal from obtaining first information, the first information being configured to maintain synchronization between the terminal and the network.

In some embodiments, the first information includes SIB31 and/or SIB31-NB.

The implementations of each module in the above apparatus can refer to the relevant embodiments mentioned above, which will not be repeated here.

Embodiments of the present disclosure also provide a computer-readable storage medium having computer program instructions stored thereon, which when executed by a processor, cause steps of the method described in the above method embodiments to be executed.

Embodiments of the present disclosure also provide a terminal, including a processor and a memory configured to store executable instructions for the processor.

In some embodiments, the processor is configured to execute steps of the method described in the above method embodiments.

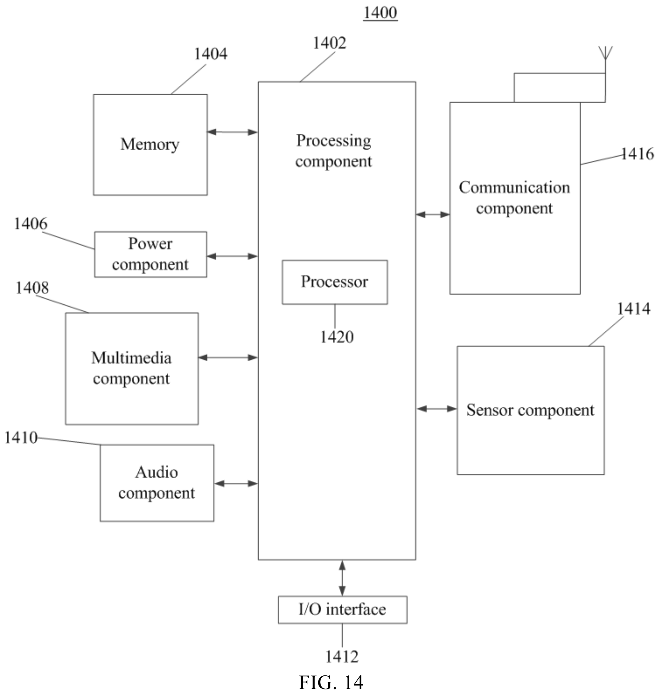

FIG. 14 is a block diagram of a terminal according to one or more embodiments of the present disclosure. For example, the terminal can be a mobile phone, a computer, a digital broadcasting terminal, a messaging terminal, a game console, a tablet device, a medical device, a fitness device, a personal digital assistant, etc.

As shown in FIG. 14, the terminal 1400 can include one or more following components: a processing component 1402, a memory 1404, a power component 1406, a multimedia component 1408, an audio component 1410, an input/output (I/O) interface 1412, a sensor component 1414, and a communication component 1416.

The processing component 1402 typically controls the overall operation of the terminal 1400, such as operations associated with display, telephone call, data communication, camera operation, and recording operations. The processing component 1402 can include one or more processors to execute instructions to finish all or part steps of the above timer processing method. In addition, the processing component 1402 can include one or more modules to facilitate interactions between the processing component 1402 and other components. For example, the processing component 1402 can include a multimedia module to facilitate the interaction between the multimedia component 1408 and the processing component 1402.

The memory 1404 is configured to store various types of data to support operations on the terminal 1400. Examples of such data include instructions, contact data, phone book data, messages, pictures, videos, and the like for any application or method operating on the terminal 1400. The memory 1404 can be implemented by any type of volatile or non-volatile storage device or their combinations, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or optical disk.

The power component 1406 provides power for various components of the terminal 1400. The power component 1406 can include a power management system, one or more power supplies, and other components associated with generating, managing, and distributing power for the terminal 1400.

The multimedia component 1408 includes a display screen providing an output interface between the terminal 1400 and the user. In some embodiments, the screen may include a liquid crystal display (LCD) and a touch panel (TP). If the screen includes a touch panel, the screen can be implemented as a touch screen to receive input signals from the user. The touch panel includes one or more touch sensors to sense touch, sliding, and gestures on the touch panel. The touch sensor can not only sense the boundaries of touch or sliding actions, but also detect the duration and pressure related to the touch or sliding operation. In some embodiments, the multimedia component 1408 includes a front camera and/or a rear camera. When the terminal 1400 is in operation mode, such as shooting mode or video mode, the front camera and/or rear camera can receive external multimedia data. Each front camera and rear camera can be a fixed optical lens system or have focal length and optical zoom capability.

The audio component 1410 is configured to output and/or input audio signals. For example, the audio component 1410 includes a microphone (MIC), which is configured to receive an external audio signal when the terminal 1400 is in an operation mode, such as a calling mode, a recording mode, and a voice recognition mode. The received audio signal may be further stored in memory 1404 or transmitted via communication component 1416. In some embodiments, the audio component 1410 also includes a speaker for outputting audio signals.

The input/output (I/O) interface 1412 provides an interface between the processing component 1402 and peripheral interface modules, which can be a keyboard, a click wheel, a button, etc. These buttons may include, but not limited to, the Home button, the Volume button, the Start button, and the Lock button.

The sensor component 1414 includes one or more sensors for providing various aspects of condition evaluation for the terminal 1400. For example, the sensor component 1414 can detect an open/closed state of the terminal 1400, relative positioning of the components. The component is, for example, a display and a keypad of the terminal 1400. The sensor component 1414 can also detect changes in the position of the terminal 1400 or one component of the terminal 1400, presence or absence of the user's contact with the terminal 1400, orientation or acceleration/deceleration of the terminal 1400 and temperature change of the terminal 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an acceleration sensor, a gyroscope sensor, a magnetic sensor, a pressure sensor, or a temperature sensor.

The communication component 1416 is configured to facilitate wired or wireless communication between the terminal 1400 and other devices. The terminal 1400 can access wireless networks based on communication standards, such as WiFi, 2G or 3G, or a combination thereof. In some embodiments, the communication component 1416 receives a broadcast signal or broadcast related information from an external broadcast management system via a broadcast channel. In some embodiments, the communication component 1416 also includes a near field communication (NFC) module to facilitate short range communication. For example, the NFC module can be implemented based on radio frequency identification (RFID) technology, infrared data association (IrDA) technology, ultra wideband (UWB) technology, Bluetooth (BT) technology and other technologies.

In some embodiments, the terminal 1400 can be implemented through one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for implementing the above timer processing method.

In some embodiments, a non-transitory computer-readable storage medium including instructions is also provided, such as a memory 1404 including instructions, which can be executed by the first processor 1720 of the terminal 1400 to finish the above timer processing method. For example, the non-transitory computer-readable storage medium can be ROM, random access memory (RAM), CD-ROM, tapes, floppy disks, optical data storage devices, etc.

The above terminal 1400 can not only be an independent electronic device, but also a part of an independent electronic device. For example, in some embodiments, the device can be an integrated circuit (IC) or a chip, where the integrated circuit can be one IC or a collection of multiple ICs. The chip can include but is not limited to the following types: GPU (Graphics Processing Unit), CPU (Central Processing Unit), FPGA (Field Programmable Gate Array), DSP (Digital Signal Processor), ASIC (Application Specific Integrated Circuit), SOC (System on Chip, SoC, System-on-Chip or System-level Chip), etc. The above integrated circuits or chips can be used to execute executable instructions (or codes) to achieve the above timer processing method. The executable instructions can be stored in the integrated circuit or chip, or obtained from other devices or equipment, for example, the integrated circuit or chip includes the processor, the memory, and interfaces for communication with other devices. The executable instruction can be stored in the memory, and the above timer processing method can be implemented when the executable instruction is executed by the processor. Alternatively, the integrated circuit or chip can receive executable instructions through the interface and transmit them to the processor for execution, in order to achieve the above timer processing method.

Embodiments of the present disclosure also provide a computer program product including a computer program executable by a programmable device, the computer program having a code portion for performing the above timer processing method when executed by the programmable device.

Embodiments of the present disclosure also provide a chip, which includes a processor and an interface. The processor is configured to read instructions to perform the above timer processing method.

After considering the specification and practices of the invention disclosed herein, those skilled in the art will easily come up with other implementation solutions of the present disclosure. The present disclosure intends to cover any variations, uses, or adaptive changes of the present disclosure, which follow the general principles of the present disclosure and include common knowledge or commonly used technical means in the art that are not disclosed in the present disclosure. The specification and embodiments are only considered as exemplary, and the true scope and spirit of the present disclosure are defined by appended claims.

It should be understood that embodiments of the present disclosure are not limited to the precise structure described in the above and shown in the drawings, and various modifications and changes can be made without departing from its scope. The scope of the present disclosure is limited only by the appended claims.

## Claims

1. A timer processing method, comprising:
determining that a timer is running when a terminal begins to perform a GNSS measurement; and
performing a first operation on the timer, wherein the first operation comprises a stop operation or a pause operation, and the timer comprises a timer T317 or a timer T318.

2. The method according to claim 1, wherein the first operation further comprises a keep-on-running operation, the timer comprises the timer T317, and the method further comprises:
determining that the timer T317 expires during the GNSS measurement performed by the terminal; and
prohibiting the timer T318 from starting.

3. The method according to claim 2, further comprising:
determining, after the terminal finishes the GNSS measurement, that the terminal successfully obtains a GNSS position and that the timer T317 already expires; and
restarting or starting the timer T318.

4. The method according to claim 3, wherein starting the timer T318, comprises:
determining that the timer T318 is not running; and
starting the timer T318.

5. The method according to claim 1, wherein the timer comprises the timer T317 or the timer T318, and the method further comprises:
determining, after the terminal finishes the GNSS measurement, that the timer is stopped after the terminal begins to perform the GNSS measurement; and
restarting the timer.

6. The method according to claim 1, wherein the timer comprises the timer T317 or the timer T318, and the method further comprises:
determining, after the terminal finishes the GNSS measurement, that the timer is paused after the terminal begins to perform the GNSS measurement; and
resuming the timer.

7. The method according to claim 1, wherein the timer comprises the timer T317 or the timer T318, and the method further comprises:
determining, after the terminal finishes the GNSS measurement, that a GNSS position is successfully obtained by the terminal and that the timer is stopped after the terminal begins to perform the GNSS measurement; and
restarting the timer.

8. The method according to claim 1, wherein the timer comprises the timer T317 or the timer T318, and the method further comprises:
determining, after the terminal finishes the GNSS measurement, that a GNSS position is successfully obtained by the terminal and that the timer is paused after the terminal begins to perform the GNSS measurement; and
resuming the timer.

9. The method according to claim 1, wherein the timer comprises the timer T318, the first operation further comprises a keep-on-running operation, and the method further comprises:
determining that the timer T318 expires during the GNSS measurement performed by the terminal; and
prohibiting the terminal from performing a second operation, wherein the second operation is used to achieve radio link re-establishment.

10. The method according to claim 9, further comprising:
determining, after the terminal finishes the GNSS measurement, that the timer T318 already expires; and
performing the second operation.

11. The method according to claim 9, further comprising:
determining, after the terminal finishes the GNSS measurement, that the timer T318 already expires; and
restarting the timer T318.

12. The method according to claim 9, further comprising:
determining, after the terminal finishes the GNSS measurement, that a GNSS position is obtained by the terminal and that the timer T318 already expires; and
restarting the timer T318.

13. The method according to claim 1, wherein the timer comprises the timer T317, and the method further comprises:
determining that the timer T317 expires during the GNSS measurement performed by the terminal; and
prohibiting the terminal from obtaining first information, wherein the first information is configured to maintain synchronization between the terminal and a network.

14. The method according to claim 13, wherein the first information comprises SIB31 and/or SIB31-NB.

15. A timer processing apparatus, comprising:
a first determination module configured to determine that the timer is running when a terminal begins to perform a GNSS measurement, and perform a first operation on the timer, wherein the first operation comprises a stop operation or a pause operation, and the timer comprises a timer T317 or a timer T318.

16. A terminal, comprising:
a processor; and
a memory configured to store executable instructions for the processor;
wherein the processor is configured to execute steps of the method according to any of claims 1 to 14.

17. A computer-readable storage medium having computer program instructions stored thereon, which when executed by a processor, cause steps of the method according to any of claims 1 to 14 to be executed.
